# EUROPÄISCHE PATENTSCHRIFT

(11) **EP 1 483 517 B1**
(45) Veröffentlichungstag und Bekanntmachung des Hinweises auf die Patenterteilung: **05.07.2006**
(21) Anmeldenummer: 03724909.1
(22) Anmeldetag: 04.03.2003
(51) Int. Cl.: F16H 3/66

(54) **MEHRSTUFENGETRIEBE**
MULTI-STAGE TRANSMISSION
TRANSMISSION A PLUSIEURS ETAGES

(30) Priorität: 08.03.2002 DE 10210348
(43) Veröffentlichungstag der Anmeldung: 08.12.2004
(73) Patentinhaber: ZF FRIEDRICHSHAFEN Aktiengesellschaft, 88038 Friedrichshafen (DE)
(72) Erfinder: ZIEMER, Peter, 88069 Tettnang (DE)
(86) Internationale Anmeldenummer: PCT/EP2003/002194
(87) Internationale Veröffentlichungsnummer: WO 2003/076828

(56) Entgegenhaltungen:
- EP-A- 0 434 525
- EP-A- 0 984 203
- EP-A- 0 984 204
- EP-A- 1 013 968
- DE-A- 19 949 507
- PATENT ABSTRACTS OF JAPAN vol. 2000, no. 07, 29. September 2000 (2000-09-29) -& JP 2000 110900 A (AISIN AW CO LTD), 18. April 2000 (2000-04-18)

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1. EP-A-1013968 beinhaltet die Merkmale des Oberbegriffs des 1 Anspruchs.

Automatgetriebe, insbesondere für Kraftfahrzeuge, umfassen nach dem Stand der Technik Planetenradsätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmen. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind axial betrachtet im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Bei dem bekannten Mehrstufengetriebe besteht der Nachteil, dass insbesondere im sechsten Gang die erste Bremse B-1 geschlossen ist. Dadurch steht der Zylinder der dritten Kupplung C-3, sodass kein hydrodynamischer Druck aufgebaut werden kann. Auf diese Weise kann der Druckausgleichsraum der dritten Kupplung leer laufen, wodurch die Schaltqualität des bekannten Mehrstufengetriebes verschlechtert wird.

Ferner ist aus der Druckschrift US 6,135,912 ein ähnliches Mehrstufengetriebe bekannt. Bei diesem Mehrstufengetriebe, das ebenfalls zwei Kupplungen C-1 und C-3 zum Übertragen des Drehmoments vom Vorschaltradsatz zu den Planetenradsätzen aufweist, sind die Innenlamellenträger dieser Kupplungen vorzugsweise mit den Planetenradsätzen verbunden. Eine weitere im Rahmen dieser Druckschrift offenbarte Ausführungsform sieht vor, dass der Außenlamellenträger der Kupplung C-3 abtriebsseitig angeordnet ist. Diese Konstruktion, insbesondere die Anordnung der Kupplungen relativ zum Abtrieb bzw. Antrieb wird auch im Rahmen der US 6,120,410 offenbart, welche ebenfalls ein Mehrstufengetriebe der eingangs genannten Art beschreibt.

Der vorliegenden Erfindung liegt die Aufgabe zugrunde, ein Mehrstufengetriebe der eingangs genannten Art vorzuschlagen, bei dem die Schaltqualität verbessert wird. Insbesondere soll eine Kupplungsanordnung angegeben werden, welche es bei kompakter Bauweise ermöglicht, ein schnelles und komfortables Schaltverhalten zu realisieren.

Diese Aufgabe wird erfindungsgemäß durch die Merkmale des Patentanspruches 1 gelöst. Vorteile und weitere Ausgestaltungen gehen aus den Unteransprüchen hervor.

Demnach wird ein erfindungsgemäßes Mehrstufengetriebe in Planetenbauweise mit zwei Leistungswegen vorgeschlagen, bei dem eine erste und eine zweite Kupplung zum Übertragen des Drehmoments des Vorschaltradsatzes zu den beiden Planetenradsätzen eines Hauptradsatzes über einen ersten Leistungsweg vorgesehen sind. Hierbei ist die zweite Kupplung abtriebsseitig mit einer Bremse verbindbar, wohingegen die Abtriebseite der ersten Kupplung mit einem Element des Hauptradsatzes verbunden ist.

Hierbei ist im Gegensatz zum Stand der Technik der Außenlamellenträger der zweiten, abtriebsseitig mit einer ersten Bremse verbindbaren Kupplung, an ein rotierendes Ausgangselement des Vorschaltradsatzes angebunden, wodurch ein Leerlaufen eines vorzugsweise vorhandenen Druckausgleichsraumes verhindert wird. Der Innenlamellenträger dieser zweiten Kupplung, führt vorzugsweise radial betrachtet oberhalb der ersten Kupplung zu dem Innenlamellenträger der ersten Bremse, welcher über eine Welle mit einem Element des zweiten Planetenradsatzes verbunden ist. Der Innenlamellenträger der ersten Kupplung ist erfindungsgemäß an den Abtrieb bzw. an dem Ausgangselement des Vorschaltradsatzes direkt angebunden, wobei der Außenlamellenträger bzw. die Zylinder-/Kolbenseite der ersten Kupplung über eine Welle mit einem Element des dritten Planetenradsatzes verbunden ist.

Ferner ist bei dem erfindungsgemäßen Mehrstufengetriebe vorgesehen, dass der Außenlamellenträger einer dritten, für den zweiten Leistungsweg vorgesehenen Kupplung mit einem Eingangselement des Vorschaltradsatzes und mit der Antriebswelle verbunden ist, wobei der Innenlamellenträger der dritten Kupplung jeweils mit einem Element des zweiten Planetenradsatzes und des dritten Planetenradsatzes verbunden ist. Darüber hinaus ist eine zweite Bremse mit einem Element des zweiten Planetenradsatzes verbunden. Ferner ist das Gehäuse mit einem Abstützelement des Vorschaltradsatzes verbunden und die Abtriebswelle ist mit einem Element des zweiten Planetenradsatzes verbunden.

Auf diese Weise werden insbesondere die erste Kupplung und die zweite Kupplung in ihrer Lage hinsichtlich des Standes der Technik vertauscht. Dadurch werden die aus dem Stand der Technik, insbesondere aus der US 6,139,463, bekannten Nachteile vermieden, sodass bei dem erfindungsgemä-ßen Mehrstufengetriebe die Schaltqualität in vorteilhafter Weise verbessert wird.

Gemäß einer Weiterbildung der vorliegenden Erfindung kann vorgesehen sein, dass als Eingangselement des Vorschaltradsatzes das Hohlrad vorgesehen ist. Es ist auch denkbar, dass bei dem erfindungsgemäßen Mehrstufengetriebe der Steg oder ein anderes Zentralrad als Eingangselement des Vorschaltradsatzes verwendet werden kann.

Im Rahmen einer weiteren Ausgestaltung der Erfindung kann vorgesehen sein, dass als Ausgangselement des Vorschaltradsatzes der Steg vorgesehen ist. Auch hier ist es denkbar, dass bei dem erfindungsgemäßen Mehrstufengetriebe je nach Bedarf ein Zentralrad vorgesehen ist.

Ferner ist es möglich, dass bei dem erfindungsgemäßen Mehrstufengetriebe als Abstützelement des Vorschaltradsatzes das Sonnenrad vorgesehen ist. Jedoch ist auch möglich, dass als Abstützelement der Steg oder ein anderes Zentralrad verwendet wird.

Besonders vorteilhaft ist es, wenn der zweite Planetenradsatz und der dritte Planetenradsatz als sogenannter Ravigneaux-Radsatz ausgebildet sind.

Im Rahmen einer Ausführungsform der Erfindung wird vorgeschlagen, den Vorschaltradsatz radial betrachtet im wesentlichen unterhalb der zweiten Kupplung anzuordnen, wodurch eine besonders kompakte Bauweise realisiert wird. In diesem Zusammenhang kann die dritte Kupplung radial betrachtet im wesentlichen unterhalb der ersten Kupplung angeordnet sein.

Vorzugsweise werden bei dem erfindungsgemäßen Mehrstufengetriebe sechs Vorwärtsgänge und ein Rückwärtsgang realisiert.

Die Erfindung wird im folgenden anhand der Zeichnungen näher erläutert.
In diesen stellen dar:
- Fig. 1: eine geschnittene Teilansicht eines erfindungsgemäßen Mehrstufengetriebes;
- Fig. 2: ein Prinzipschaltbild des erfindungsgemäßen Mehrstufengetriebes und
- Fig. 3: ein Schaltschema des erfindungsgemäßen Mehrstufengetriebes gemäß den Fig. 1 und 2.

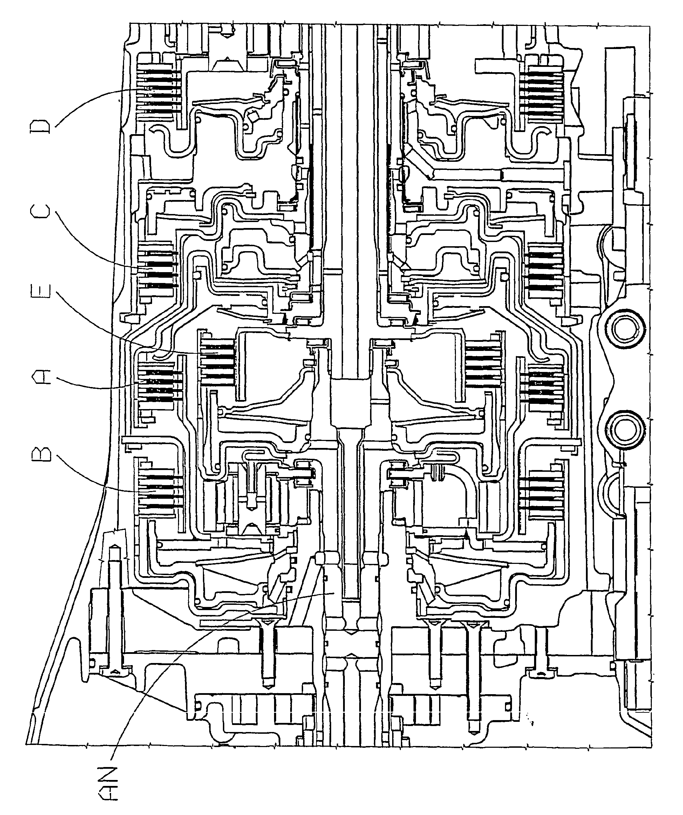

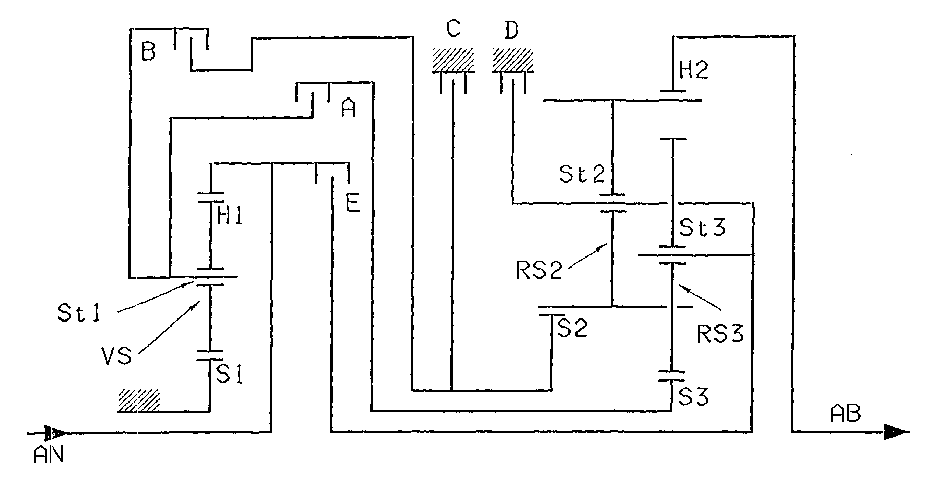

In den Fig. 1 und 2 ist ein erfindungsgemäßes Mehrstufengetriebe in Planetenbauweise, insbesondere ein Automatgetriebe für ein Kraftfahrzeug, dargestellt. Das erfindungsgemäße Mehrstufengetriebe umfasst mindestens eine Antriebswelle AN und eine Abtriebswelle AB, welche in einem Gehäuse angeordnet sind. Des weiteren ist ein erster Radsatz ein Vorschaltradsatz VS sowie ein Hauptradsatz mit einem zweiten und einem dritten Planetenradsatz RS2, RS3 vorgesehen. Der zweite Planetenradsatz RS2 und der dritte Planetenradsatz RS3 sind bei der gezeigten Ausgestaltung des erfindungsgemäßen Mehrstufengetriebes als Ravigneaux-Radsatz ausgebildet.

Ferner sind bei dem Mehrstufengetriebe fünf Schaltelemente vorgesehen, nämlich eine erste Kupplung A, eine zweite Kupplung B sowie eine dritte Kupplung E und eine erste Bremse C und eine zweite Bremse D, wobei die Kupplungen A und B das Drehmoment des Vorschaltradsatzes zu den beiden Planetenradsätzen RS2, RS3 des Hauptradsatzes übertragen. Die Schaltelemente bewirken durch ein selektives paarweises Eingreifen verschiedene Übersetzungsverhältnisse zwischen der Antriebswelle AN und der Abtriebswelle AB, sodass bevorzugt sechs Vorwärtsgänge und ein Rückwärtsgang realisierbar sind.

Erfindungsgemäß ist bei dem Mehrstufengetriebe vorgesehen, dass der Außenlamellenträger bzw. die Zylinder-, Kolben- und Druckausgleichsseite der Kupplung B mit dem Steg St1 des Vorschaltradsatzes VS verbunden ist. Vorzugsweise weist zumindest die Kupplung (B) eine Servo-Einrichtung mit einem dynamischen Druckausgleich auf. Durch die erfindungsgemäße Konzeption wird ein Leerlaufen der vorhandenen Druckausgleichsräume vermieden, wodurch der Komfort und die Schaltqualität verbessert wird.
Der Innenlamellenträger der Kupplung B führt hierbei vorzugsweise radial betrachtet oberhalb der Kupplung A zu dem Innenlamellenträger der Bremse C, welche an dem Gehäuse befestigt ist. Der Innenlamellenträger der Bremse C ist über eine Welle mit dem Sonnenrad S2 des als Ravigneaux-Radsatz ausgebildeten zweiten Planetenradsatzes RS2 verbunden. Der Innenlamellenträger der Kupplung A ist antriebsseitig angeordnet und an dem Steg St1 des Vorschaltradsatzes VS direkt angebunden, wobei der Außenlamellenträger bzw. die Zylinder- bzw. Kolben- und Druckausgleichsseite der Kupplung A über eine Welle mit dem Sonnenrad S3 des als Ravigneaux-Radsatzes ausgebildeten dritten Planetenradsatzes RS3 verbunden ist.

Ferner ist der Außenlamellenträger bzw. die Zylinder- bzw. Kolben- und Druckausgleichsseite der Kupplung E mit dem Hohlrad H1 des Vorschaltradsatzes VS und mit der Antriebswelle AN verbunden. Der Innenlamellenträger der Kupplung E ist jeweils mit dem Steg St2 des zweiten Planetenradsatzes RS2 und mit dem Steg St3 des dritten Planetenradsatzes RS3 verbunden. Des weiteren ist die Bremse D, welche mit dem Gehäuse verbunden ist, mit ihrem Innenlamellenträger an den Steg St2 des zweiten Planetenradsatzes RS2 angebunden. Als Abstützelement des Vorschaltradsatzes VS ist das Sonnenrad S1 mit dem Gehäuse verbunden. Darüber hinaus ist das Hohlrad H2 mit der Abtriebswelle AB verbunden.

Bei dem erfindungsgemäßen Mehrstufengetriebe kann durch die Anordnung des Antriebs der Kupplung A als Innenlamellenträger und des Antriebs der Kupplung B als Außenlamellenträger die Schaltqualität in vorteilhafter Weise verbessert werden. Darüber hinaus kann bei dieser Ausgestaltung der vorliegenden Erfindung die Getriebeeingangsdrehzahlerfassung an der bisherigen Stelle belassen werden.

In den Fig. 1 und 2 ist der Vorschaltradsatz VS radial betrachtet im wesentlichen unterhalb der zweiten Kupplung B angeordnet und die dritte Kupplung E im wesentlichen unterhalb der ersten Kupplung A, wodurch eine besonders kompakte Bauweise realisiert wird.

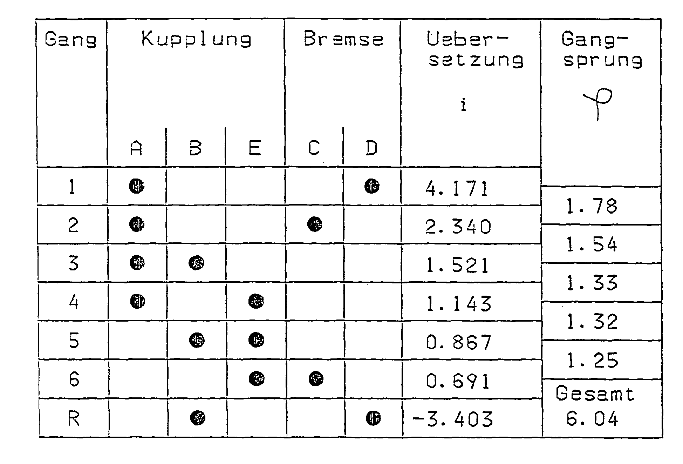

Das entsprechende Schaltschema des Ausführungsbeispiels des erfindungsgemäßen Mehrstufengetriebes ist in Fig. 3 dargestellt, wobei beispielhaft Übersetzungen i und die sich ergebenden Gangsprünge ϕ angegeben sind.

Demnach weist das erfindungsgemäße Mehrstufengetriebe eine progressive Gangabstufung auf. Zudem werden bei sequentieller Schaltweise Doppelschaltungen vermieden, da zwei benachbarte Gangstufen jeweils ein Schaltelement gemeinsam nutzen. Des weiteren wird bei jeder beliebigen Schaltung zwischen dem ersten und dem vierten Gang und zwischen dem fünften und dem sechsten Gang jeweils nur ein Schaltelement betätigt.

Für die Gänge 1 bis 4 ist die Kupplung A ständig aktiviert. Im ersten Gang wird zusätzlich die Bremse D, im zweiten Gang zusätzlich die Bremse C, im dritten Gang zusätzlich die Kupplung B und im vierten Gang zusätzlich die Kupplung E geschlossen bzw. betätigt. Bei den Gängen 5 und 6 wird neben der ständig betätigten Kupplung E im fünften Gang zusätzlich die Kupplung B und im sechsten Gang zusätzlich die Bremse C aktiviert. Im Rückwärtsgang werden die Kupplung B und die Bremse D aktiviert.

### Bezugszeichen

- A: erste Kupplung
- B: zweite Kupplung
- E: dritte Kupplung
- C: erste Bremse
- D: zweite Bremse
- VS: Vorschaltradsatz
- RS2: zweiter Planetenradsatz
- RS3: dritter Planetenradsatz
- AN: Antrieb
- AB: Abtrieb
- S1: Sonnenrad des Vorschaltradsatzes
- S2: Sonnenrad des zweiten Planetenradsatzes
- S3: Sonnenrad des dritten Planetenradsatzes
- St1: Steg des Vorschaltradsatzes
- St2: Steg des zweiten Planetenradsatzes
- St3: Steg des dritten Planetenradsatzes
- H1: Hohlrad des Vorschaltradsatzes
- H2: Hohlrad des zweiten Planetenradsatzes
- i: Übersetzung
- ϕ: Gangsprung

## Patentansprüche

1. Mehrstufengetriebe in Planetenbauweise, insbesondere Automatgetriebe für ein Kraftfahrzeug, umfassend mindestens eine Antriebswelle (AN) und eine Abtriebswelle (AB), welche in einem Gehäuse angeordnet sind, zumindest zwei Planetenradsätze (RS2, RS3) eines Hauptradsatzes und einen Vorschaltradsatz (VS) sowie mindestens fünf Schaltelemente, nämlich eine erste Kupplung (A) und eine zweite Kupplung (B), welche das Drehmoment des Vorschaltradsatzes über einen ersten Leistungsweg zu den Planetenradsätzen (RS2, RS3) des Hauptradsatzes übertragen sowie eine dritte Kupplung (E) und eine erste Bremse (C) sowie eine zweite Bremse (D), wobei die Schaltelemente durch ein selektives paarweises Eingreifen verschiedene Übersetzungsverhältnisse zwischen der Antriebswelle und der Abtriebswelle bewirken, wobei der Außenlamellenträger der zweiten Kupplung (B) mit einem Ausgangselement des Vorschaltradsatzes (VS) verbunden ist, wobei der Innenlamellenträger der zweiten Kupplung (B) zu dem Innenlamellenträger der ersten Bremse (C) führt, welcher über eine Welle mit einem Element des zweiten Planetenradsatzes (RS2) verbunden ist, der Innenlamellenträger der ersten Kupplung (A) mit einem Ausgangselement des Vorschaltradsatzes (VS) verbunden ist, wobei der Außenlamellenträger der ersten Kupplung (A) mit einem Element des dritten Planetenradsatzes (RS3) verbunden ist, der Außenlamellenträger der dritten Kupplung (E) mit einem Eingangselement des Vorschaltradsatzes (VS) und mit der Antriebswelle (AN) verbunden ist, **dadurch gekennzeichnet, dass** der Innenlamellenträger der dritten Kupplung (E) jeweils mit einem Element des zweiten Planetenradsatzes (RS2) und des dritten Planetenradsatzes (RS3) verbunden ist, dass die zweite Bremse (D) mit einem Element des zweiten Planetenradsatzes (RS2) verbunden ist, dass das Gehäuse mit einem Abstützelement des Vorschaltsatzes (VS) verbunden ist und dass die Abtriebswelle (AB) mit einem Element des zweiten Planetenradsatzes (RS2) verbunden ist.

2. Mehrstufengetriebe nach Anspruch 1, **dadurch gekennzeichnet, dass** der Innenlamellenträger der zweite Kupplung (B) radial betrachtet oberhalb der erste Kupplung (A) zu dem Innenlamellenträger der erste Bremse (C) führt.

3. Mehrstufengetriebe nach Anspruch 1 oder 2, **dadurch gekennzeichnet, dass** der Vorschaltradsatz (VS) radial betrachtet im wesentlichen unterhalb der zweite Kupplung (B) angeordnet ist.

4. Mehrstufengetriebe nach Anspruch 1, 2 oder 3, **dadurch gekennzeichnet, dass** die dritte Kupplung (E) radial betrachtet im wesentlichen unterhalb der erste Kupplung (A) angeordnet ist.

5. Mehrstufengetriebe nach einem der Ansprüche 1 bis 4, **dadurch gekennzeichnet, dass** zumindest die zweite Kupplung (B) eine Servo-Einrichtung mit einem dynamischen Druckausgleich aufweist.

6. Mehrstufengetriebe nach einem der vorangehenden Ansprüche, **dadurch gekennzeichnet, dass** als Eingangselement des Vorschaltradsatzes (VS) das Hohlrad (H1) vorgesehen ist.

7. Mehrstufengetriebe nach einem der vorangehenden Ansprüche, **dadurch gekennzeichnet, dass** als Ausgangselement des Vorschaltradsatzes (VS) der Steg (St1) vorgesehen ist.

8. Mehrstufengetriebe nach einem der vorangehenden Ansprüche, **dadurch gekennzeichnet, dass** als Abstützelement des Vorschaltradsatzes (VS) das Sonnenrad (S1) vorgesehen ist, welches mit dem Gehäuse verbunden ist.

9. Mehrstufengetriebe nach einem der vorangehenden Ansprüche, **dadurch gekennzeichnet, dass** der zweite Planetenradsatz (RS2) und der dritte Planetenradsatz (RS3) als Ravigneaux-Radsatz ausgebildet sind.

10. Mehrstufengetriebe nach einem der vorangehenden Ansprüche, **dadurch gekennzeichnet, dass** sechs Vorwärtsgänge und ein Rückwärtsgang realisierbar sind.

## Claims

1. The invention relates to a planetary-type multistep transmission, in particular an automatic transmission for a motor vehicle, which comprises at least one input shaft (IN) and one output shaft (OUT), which are arranged in a housing, at least two planetary sets (RS2, RS3) of a main gear set and one front-mounted gear set (VS), and at least five shifting components, that is one first clutch (A) and a second clutch (B), which transmit the torque of the front-mounted gear set to the planetary sets (RS2, RS3) of the main gear set via a first power path, and a third clutch (E) and a first brake (C) as well as a second brake (D), with the shifting components bringing about various gear ratios between input shaft and output shaft by means of selective, paired engagement, with the outer disk carrier of the second clutch (B) being linked to an output element of the front-mounted gear set (VS),with the inner disk carrier of the second clutch (B) leading to the inner disk carrier of the first brake (C), which is linked to an element of the second planetary set (RS2) via a shaft, with the inner disk carrier of the first clutch (A) being linked to an output element of the front-mounted gear set (VS), with the outer disk carrier of the first clutch (A) being linked to an element of the third planetary set (RS3), with the outer disk carrier of the third clutch (E) being linked to an input element of the front-mounted gear set (VS) and to the input shaft (IN), **characterized in that** the inner disk carrier of the third clutch (E) is connected to one element each of the second planetary set (RS2) and the third planetary set (RS3), that the second brake (D) is linked to an element of the second planetary set (RS2), that the housing is linked to a supporting element of the front-mounted gear set (VS), and that the output shaft (OUT) is linked to an element of the second planetary set (RS2).

2. A multistep transmission according to claim 1, **characterized in that** from a radial point of view the inner disk carrier of the second clutch (B) leads to the inner disk carrier of the first brake (C) above the first clutch (A).

3. A multistep transmission according to claim 1 or 2, **characterized in that** from a radial point of view the front-mounted gear set (VS) is largely arranged below the second clutch (B).

4. A multistep transmission according to claim 1, 2, or 3, **characterized in that** from a radial point of view the third clutch (E) is largely arranged below the first clutch (A).

5. A multistep transmission according to one of the claims 1 through 4, **characterized in that** at least the second clutch (B) features a servo unit with dynamic pressure equalization.

6. A multistep transmission according to one of the preceding claims, **characterized in that** the internal gear (H1) represents the input element of the front-mounted gear set (VS).

7. A multistep transmission according to one of the preceding claims, **characterized in that** the spider (St1) represents the output element of the front-mounted gear set (VS).

8. A multistep transmission according to one of the preceding claims, **characterized in that** the center gear (S1), which is linked to the housing, represents the supporting element of the front-mounted gear set (VS).

9. A multistep transmission according to one of the preceding claims, **characterized in that** the second planetary set (RS2) and the third planetary set (RS3) are designed as Ravigneaux-type planetary gears.

10. A multistep transmission according to one of the preceding claims, **characterized in that** six forward gears and one rearward gear can be realized.

## Revendications

1. Boîte de vitesses à plusieurs étages à trains épicycloïdaux, en particulier une boîte de vitesses automatique pour un véhicule automobile, comprenant au moins un arbre d'entrée (AN) et un arbre de sortie (AB), qui sont disposés dans un carter, au moins deux trains épicycloïdaux (RS2, RS3) d'un train d'engrenages principal et un train d'engrenages monté en amont (VS) ainsi qu'au moins cinq éléments de commande, à savoir un premier embrayage (A) et un deuxième embrayage (B), qui transmettent le couple du train d'engrenages monté en amont via un premier chemin de puissance aux trains épicycloïdaux (RS2, RS3) du train d'engrenages principal ainsi qu'un troisième embrayage (E) et un premier frein (C) ainsi qu'un deuxième frein (C), sachant que les éléments de commande produisent, par un engrènement sélectif et par paires, différents rapports de démultiplication entre l'arbre d'entrée et l'arbre de sortie, sachant que le plateau porte-disques extérieur du deuxième embrayage (B) est lié à un élément de sortie du train d'engrenages monté en amont (VS), sachant que plateau porte-disques intérieur du deuxième embrayage (B) mène au plateau porte-disques intérieur du premier frein (C), qui est lié au moyen d'un arbre à un élément du deuxième train épicycloïdal (RS2), le plateau porte-disques intérieur du premier embrayage (A) étant lié à un élément de sortie du train d'engrenages monté en amont (VS), sachant que le plateau porte-disques extérieur du premier embrayage (A) est lié à un élément du troisième train épicycloïdal (RS3), le plateau porte-disques extérieur du troisième embrayage (E) étant lié à un élément d'entrée du train d'engrenages monté en amont (VS) et à un arbre d'entrée (AN), **caractérisée en ce que** le plateau porte-disques intérieur du troisième embrayage (E) est lié respectivement à un élément du deuxième train épicycloïdal (RS2) et du troisième train épicycloïdal (RS3), **en ce que** le deuxième frein (D) est lié à un élément du deuxième train épicycloïdal (RS2), **en ce que** le carter est lié à un élément d'appui du train d'engrenages monté en amont (VS) et **en ce que** l'arbre de sortie (AB) est lié à un élément du deuxième train épicycloïdal (RS2).

2. Boîte de vitesses à plusieurs étages selon la revendication 1, **caractérisée en ce que** le plateau porte-disques intérieur du deuxième embrayage (B) mène, si l'on regarde dans le sens radial, au-dessus du premier embrayage (A) au plateau porte-disques intérieur du premier frein (C).

3. Boîte de vitesses à plusieurs étages selon les revendications 1 ou 2, **caractérisée en ce que** le train d'engrenages monté en amont (VS), est disposé, si l'on regarde dans le sens radial, essentiellement au-dessous du deuxième embrayage (B).

4. Boîte de vitesses à plusieurs étages selon les revendications 1, 2 ou 3, **caractérisée en ce que** le troisième embrayage (E) est disposé, si l'on regarde dans le sens radial, essentiellement au-dessous du premier embrayage (A).

5. Boîte de vitesses à plusieurs étages selon une des revendications 1 à 4, **caractérisée en ce que** au moins le deuxième embrayage (B) comporte un dispositif servo à compensation de pression dynamique.

6. Boîte de vitesses à plusieurs rapports selon une des revendications précédentes, **caractérisée en ce que** en tant qu'élément d'entrée du train d'engrenages monté en amont (VS) est prévue la couronne (H1).

7. Boîte de vitesses à plusieurs rapports selon une des revendications précédentes, **caractérisée en ce que** en tant qu'élément de sortie du train d'engrenages monté en amont (VS) est prévue la nervure (St1).

8. Boîte de vitesses à plusieurs rapports selon une des revendications précédentes, **caractérisée en ce que** en tant qu'élément d'appui du train d'engrenages monté en amont (VS) est prévu le pignon planétaire (S1) qui est lié au carter.

9. Boîte de vitesses à plusieurs rapports selon une des revendications précédentes, **caractérisée en ce que** le deuxième train épicycloïdal (RS2) et le troisième train épicycloïdal (RS3) sont réalisés comme trains Ravigneaux.

10. Boîte de vitesses à plusieurs rapports selon une des revendications précédentes, **caractérisée en ce que** sont réalisables six rapports avant et une marche arrière.
